# EUROPEAN PATENT SPECIFICATION

(11) **EP 0 868 589 B1**
(45) Date of publication and mention of the grant of the patent: **18.09.2002**
(21) Application number: 96945459.4
(22) Date of filing: 20.12.1996
(51) Int. Cl.: E05F 15/14, E05B 17/00

(54) **REAR CENTER MOUNTED POWER DOOR ACTUATOR**
KRAFTANTRIEB FÜR EINE SCHIEBETÜRE
ACTIONNEUR A MOTEUR DE PORTE A MONTAGE POSTERIEUR EN POSITION INTERMEDIAIRE

(30) Priority: 20.12.1995 US 575643
(43) Date of publication of application: 07.10.1998
(73) Proprietor: ITT AUTOMOTIVE ELECTRICAL SYSTEMS, INC., Auburn Hills, MI 48326-2356 (US)
(72) Inventor: BUCHANAN, Harry, C., Jr., Spring Valley, OH 45370 (US)
(74) Representative: Dreiss, Fuhlendorf, Steimle & Becker
(86) International application number: US9620929
(87) International publication number: WO97022777

(56) References cited:
- EP-A- 0 598 427
- EP-A- 0 609 585
- EP-A- 0 611 869
- US-A- 5 018 303
- US-A- 5 063 710
- US-A- 5 155 937

## Description

### FIELD OF THE INVENTION

The present invention relates to a power drive for moving a movable closure, such as a sliding door, hatch, roof panel, or window, along a fixed path between an open position and a closed position with respect to a portal defining a passage through a barrier, and more particularly to a sliding door system accommodating manual operation and powered operation of a sliding door of a vehicle in forward and rearward movement along a fixed path between an open position and a closed position with a striker latch mechanism.

### BACKGROUND OF THE INVENTION

It is generally known to provide a sliding door for van-type vehicles, where the door is moved along a fixed path generally parallel to the side wall of the van for a major portion of its opening and closing movement. Typically, the sliding door of a van-type vehicle moves generally into the plane of the door opening during a portion of its respective final closing and initial opening movements, so as to be flush with the side wall when fully closed, and moves generally out of the plane of the door opening during its initial opening movement so as to be along side of, and parallel to, the side wall of the vehicle in a position generally to the rear of the door opening when fully opened.

In van-type vehicles having sliding door systems, typically upper and lower forward guide rails or tracks are attached to the top and bottom portions, respectively, of the portal defining an opening through the wall of the vehicle, and a rear guide rail is attached to the exterior of the side wall, at an elevation approximately midway between the elevation of the upper and lower forward guide rails. The respective forward end portions of the various guide rails are curved inwardly with respect to the vehicle body, and bracket and roller assemblies are fastened to the respective upper and lower forward ends of the sliding door, as well as to an intermediate position at the rear end of the sliding door. The bracket and roller assemblies are slidingly supported in the guide rails to guide the door through its opening and closing movements.

Movement of the sliding door through a major portion of the rearward track or guide rail extending generally parallel to the side wall of the vehicle requires high displacement with low force to achieve the transitional movement, since only frictional resistance and gravity resistances due to changes in grade must be overcome. The movement of the sliding door through a forward portion of the guide rail track, curved inboard with respect to the vehicle, requires a low displacement with high force. The forces associated with an elastomeric weather seal surrounding the door opening must be overcome and an unlatched striker or fork bolt on the door must be engaged by a corresponding fork bolt or striker at the rear portion of the van body door opening. During manual operation, sliding van doors are typically moved with great momentum through the entire closing movement in order to ensure full weather strip compression and latch operation at the end of such movement.

### SUMMARY OF THE INVENTION

It is desirable in the present invention to provide a power drive system for moving a movable closure along a fixed path between an open position and a closed position with respect to a portal defining a passage through a barrier, such that latch bolt operation and weather strip compression can be accomplished at the end of such movement without requiring high momentum during the closing movement. It is also desirable in the present invention to provide a power drive for moving a closure with low momentum between its fully open position and fully closed position, such that the closure is moved into the primary latch position in a controlled manner without requiring additional mechanisms for engaging and moving the striker from the secondary latch position through the final portion of closing movement into the primary latch position. It is also desirable to provide a smaller power drive package for installation in a vehicle. Providing a power drive system that does not leave the drive member under load is desirable so that the drive member is not subjected to stretching forces over long periods of time and so that the need for slack take-up mechanisms is eliminated. It is further desirable to provide a power drive system with high closing force and low momentum to move the latch mechanism into the primary position with the power drive motor.

The present invention provides for automatically closing sliding doors such that the controller and motor drive translates the door along the entire fixed path during opening and closing movement to carry the fork bolt or striker on the door through the secondary latch position to the primary latch position to ensure full door security and sealing. The present invention physically pulls the door and connected striker or fork bolt into the corresponding fork bolt or striker connected to a frame defining the opening, through the secondary position and into the primary latch position, then initiates power striker motion to move the door into the seals. The center rear hinge roller track is modified to accept a push/pull drive member and the translation means is coupled to the track for pushing and pulling the door open and closed. The advantage of the present invention is to pull the roller assembly and door fork bolt assembly into the power striker all the way to the primary latch position, passed the secondary position. Previously known power drive systems required high momentum to ensure proper closing of the sliding door assemblies for van-type vehicles. The power striker of the present invention then actuates a power striker to pull the door into the seals. If the translator motor has sufficient power, the latch mechanism could be fixed. The present invention provides mechanical advantage to pull the door into the primary latch position through the secondary latch position with a drive member, such as DYMETROL tape, and then uses a power striker to ensure sealing. The drive member pushes the door open during initial opening movement, which is an action that takes far less force than required to pull the door into the primary latch position.

The power drive according to the present invention moves a movable closure along a fixed path between an open position and a closed position with respect to a portal defining a passage through a barrier. Bracket means is operably connected to the movable closure. Guide means is connected to the barrier and operably engages the bracket means for guiding the bracket means along the fixed path between the open and closed positions of the movable closure. Elongated means is slidably disposed within the guide means and connected to the bracket means for driving the bracket means along the fixed path. Translator means operably engages with the elongated means for powering movement of the elongated means and connected bracket means with respect to the guide means along the fixed path.

Other objects, advantages, and applications of the present invention will become apparent to those skilled in the art when the following description of the best mode contemplated for practicing the invention is read in conjunction with the accompanying drawings.

### BRIEF DESCRIPTION OF THE DRAWINGS

The description herein makes reference to the accompanying drawings wherein like reference numerals refer to like parts throughout the several views, and wherein:
Figure 1 is a perspective view of a movable closure disposed in a closed position with respect to a portal defining a passage through a barrier, such as a sliding door mounted on a van-type vehicle;
Figure 2 is an exploded perspective view of a power drive according to the present invention for moving the movable closure;
Figure 3 is a perspective view illustrating a power drive according to the present invention mounted with respect to the van-type vehicle;
Figure 4 is a detail cross-sectional view of guide means for guiding bracket means connected to the movable closure taken along line 4-4 as shown in Figure 2;
Figure 5 is a cross-sectional view similar to that of Figure 4of an alternative configuration of the guide means for guiding the bracket means connected to the removable closure taken along a line similar to line 4-4 as shown in Figure 2;
Figure 6 is a cross-sectional detailed view of an alternative construction of the guide track illustrated in Figure 4;
Figure 7 is a cross-sectional detailed view of an alternative construction for the guide track illustrated in Figure 5;
Figure 8 is a partial cross-sectional view of translator means according to the present invention for powering movement of the movable closure with push/pull tape-type drive member taken along a line similar to line 9-9 as shown in Figure 10;
Figure 9 is a partial cross-sectional view of an alternative configuration of translator means according to the present invention for powering movement of the closure means with a helically wound push/pull cable-type drive member taken along a line 9-9 as shown in Figure 10;
Figure 10 is a cross-sectional plan view of the translator means taken along a line 10-10 illustrated in Figure 9; and
Figure 11 is a schematic view of a movable closure with fork bolt and striker means movable between a secondary latch position and a primary latch position.

### DESCRIPTION OF THE PREFERRED EMBODIMENT

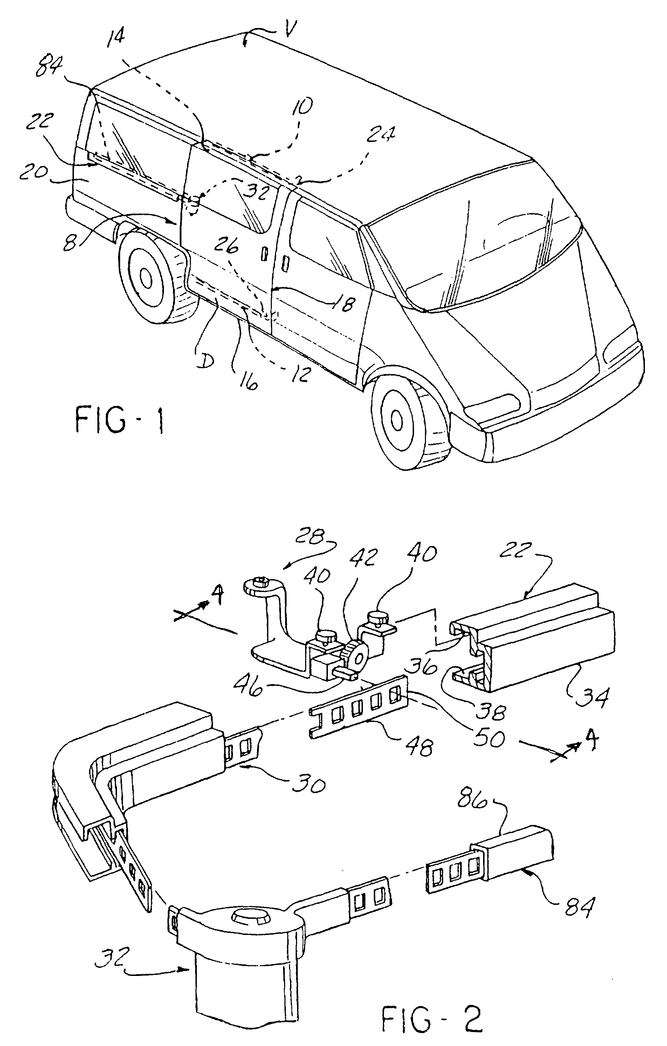

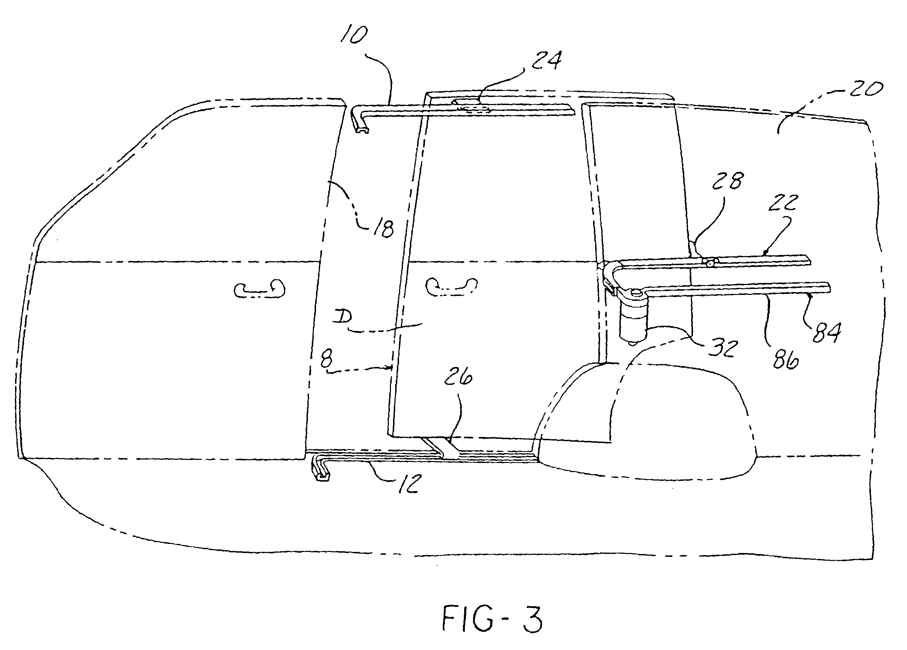

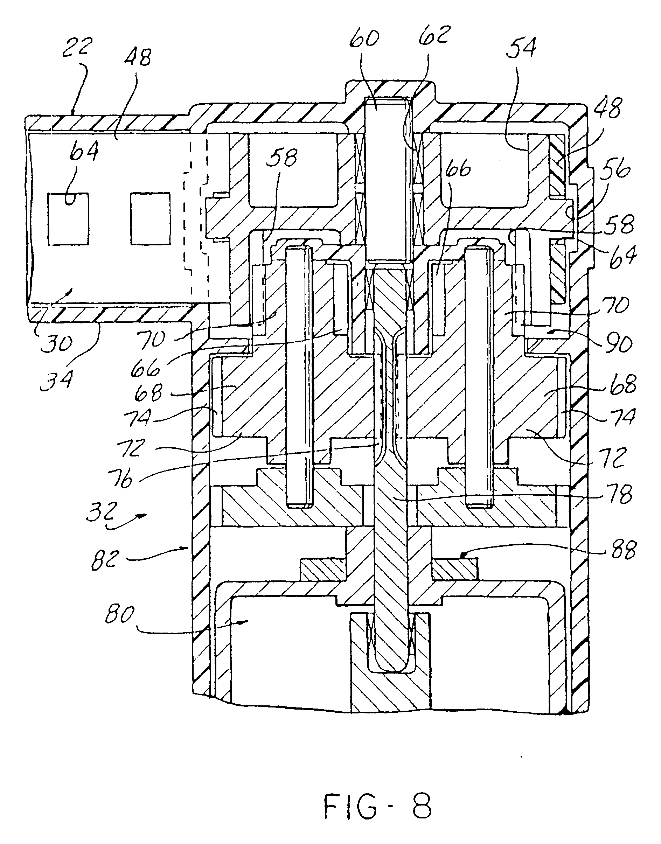

In Figures 1 and 3, there is shown a barrier, for example a wall of a vehicle such as a van V, having a movable closure 8, such as a sliding door D located on at least one side of the vehicle. Vans using such sliding doors have been available for years and the structural arrangements by which the door is mounted on the vehicle for manual movement between the closed position shown in Figure 1, where the door is sealingly seated in a door opening, and an open position in which the door is disposed at the side of the van rearwardly of the door opening is well known. In the standard arrangement, the door is latched in its closed position, typically by mechanical latches at the front and rear edges of the door, the latches being mechanically linked to a latch actuator mounted within the door to be simultaneously released by manual actuation of appropriate door handles or electronically released in response to a signal from an electronic control switch or unit. In many cases, the rear latch may include a power-driven striker mechanism which is latchingly engaged with the door as it approaches its closed position and is power driven to move the latched door to its fully closed position in compression against the seal member extending peripherally around the door opening of the vehicle.

The present invention is directed to certain components of a power drive system by means of which a movable closure, such as a sliding door, hatch, roof panel, window, or the like, can be power driven in either direction between its open and closed positions. Referring generally to Figures 1-3, a van-type vehicle V with at least one sliding door D typically includes upper and lower forward guide rails, tracks, or slots, 10 and 12 respectively, attached to the top and bottom portions, 14 and 16 respectively, of the portal 18 defining an opening through the barrier 20, such as a wall of the vehicle. A rear guide means 22, such as a rail, track, or slot, is attached to, or formed in, the exterior of the side wall of the vehicle at an elevation approximately midway between the elevation of the upper and lower forward guide rails 10 and 12. The respective forward end portions of the various guide means, including the upper, lower, and rear guides, curve inwardly with respect to the vehicle body. A bracket and roller assembly 24 and 26 are fastened to the respective upper and lower forward ends of the sliding door D. Bracket means 28 is operably connected to the movable closure generally midway between the first and second edges. The bracket and roller assemblies 24 and 26, and the bracket means 28, are slidingly supported in the corresponding guide rails 10 and 12 and guide means 22 to guide the movable closure through opening and closing movements with respect to the barrier. The guide means 22 is connected to the barrier generally midway between the first and second guide tracks, 10 and 12 respectively, and operably engages the bracket means 28 for guiding the bracket means 28 along the fixed path between the opened and closed positions of the movable closure. Elongated means 30 is slidably disposed within the guide means 22 and connected to the bracket means 28 for driving the bracket means 28 along the fixed path. Translator means 32 is operably engageable with the elongated means 30 for powering movement of the elongated means 30 and connected bracket means 28 with respect to the guide means 22 along the fixed path.

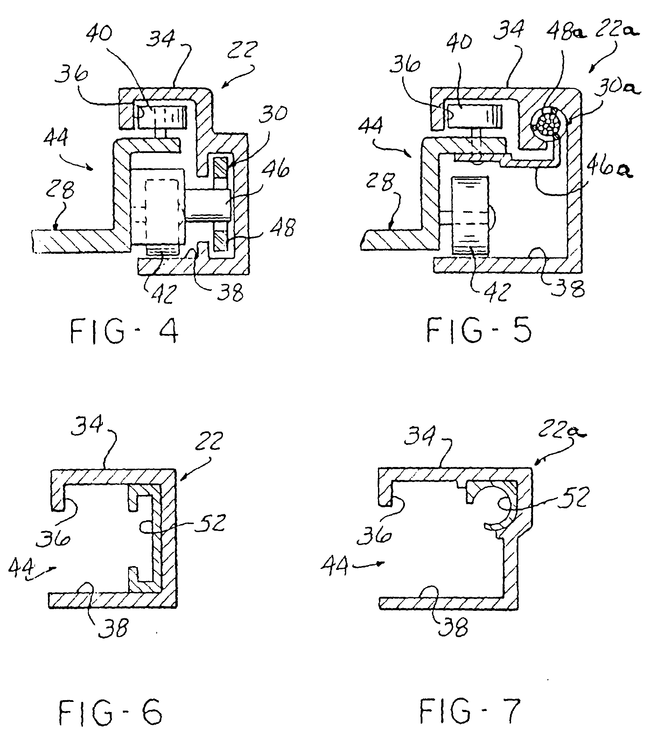

As best seen in Figures 2 and 4-7, the rear guide means 22 or alternative configuration 22a includes an elongated track or housing 34. The elongated track or housing 34 typically defines at least two surfaces 36 and 38 disposed at an angle with respect to one another engageable with rollers 40 and 42 respectively. The rollers 40 and 42 typically have axes of rotation that are disposed at an angle with respect to one another, generally corresponding to a 90° angle as illustrated in Figures 4 and 5. In the illustrated embodiments of Figures 4-7, the guide means 22 or 22a defines a slot 44 of sufficient dimension to permit the bracket means 28 to extend therethrough. The housing 34 generally defines a first chamber for receiving the rollers 40 and 42, and a second chamber for slidably receiving the elongated means 30. The first and second chambers are in communication with one another longitudinally along the length of the housing 34 allowing attachment of the bracket means 28 to the elongated means 30 or 30a, such as by coupling member 46 or 46a. The elongated means 30 may include a tape-like drive member 48 as illustrated in Figures 2 and 4. The tape-like drive member 48 is commercially available under the trade name DYMETROL. The elongated means 30 or 30a is slidably guided within the second chamber of the housing 34 to move the bracket means 28 with respect to the guide means 22. The elongated means 30 or 30a can include an elongated drive member having first and second ends, where the first end 50 is connected to the bracket means 28 by coupling member 46 or 46a. The elongated means 30 or 30a operably engages with the translator means 32 to pull the bracket means 28 along the guide means 22 from the open position to the closed position. The translator means 32 can be reversed to push the elongated means 30 or 30a and connected bracket means 28 with respect to the guide means 22 in order to move the movable closure from the closed position to the open position. This provides a push/pull drive member and thereby reduces or eliminates the problems associated with previously known pull/pull cable systems used to power sliding doors on van-type vehicles. The elongated means 30a can also be in the form of a push/pull helically wound cable-like drive member 48a as illustrated in Figures 5, 9, and 10. As previously described, the cable-like drive member 48a is slidably received within the second chamber defined by the housing 34, and connected to the bracket means 28 by coupling member 46a. The helically wound cable-like drive member 48a operably engages the translator means 32 in order to pull the movable closure from the open position into the closed position. The helically wound, cable-like drive member 48a can be pushed by the translator means 32 within the second chamber of the housing 34 in order to drive the bracket means 28 along the guide means 22 from the closed position to the open position. The cable-like drive member 48a is commercially available under trade names, such as TELEFLEX, HILEX, or SUHNER cable. The housing 34 may be formed as a single piece, such as by extrusion, injection molding, or metal forming, or in the alternative may be constructed of a plurality of individual pieces assembled into a track 34 having a first chamber for receiving the rollers 40 and 42 and a second chamber for receiving the drive member 48 or 48a. In the preferred configuration, the first chamber of the housing 34 is disposed adjacent to the slot 44 and the second chamber for slidably receiving the drive member 48 or 48a is disposed spaced from the slot 44. As best seen in Figures 6 and 7, the portion of the housing 34 forming the second chamber for slidably receiving the drive member 48 or 48a may be formed of a separate track or channel 52 connected with respect to the housing 34.

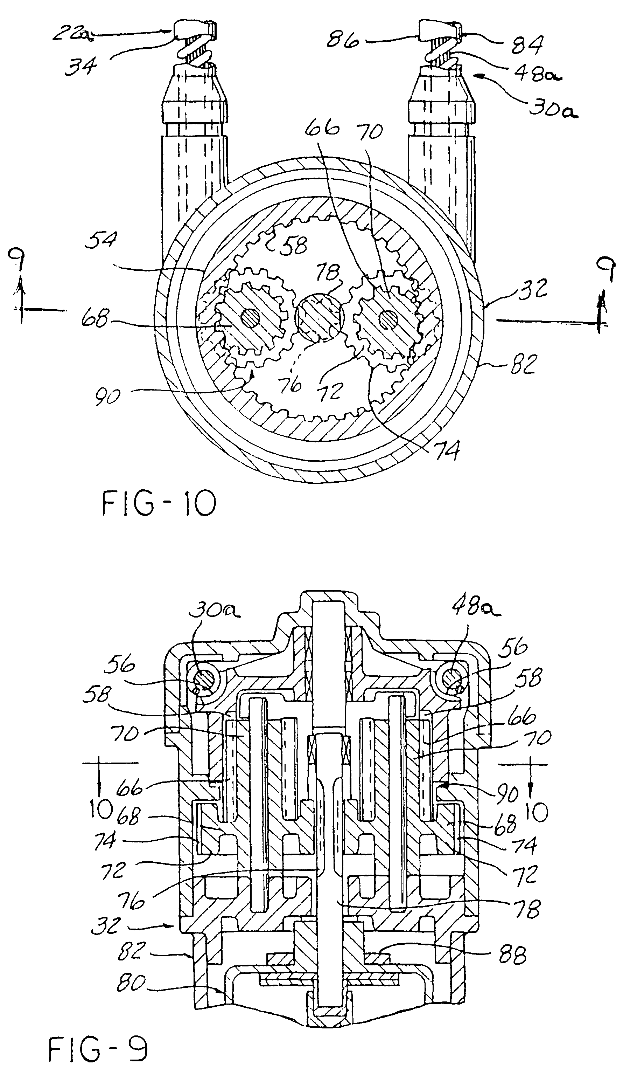

Referring now to Figure 8, the translator means 32 includes a rotatable hub 54 having drive member engaging protrusions 56 on an external surface and a plurality of gear teeth 58 formed on an internal periphery. The hub 54 is rotatably connected to a first shaft 60 by bearings 62. In Figure 8, the drive member 48 is illustrated in a tape-like form having a plurality of apertures 64 formed therein spaced longitudinally from one another, and adapted to receive the drive member engaging protrusions 56 formed on the hub 54. The plurality of first gear teeth 58 intermeshingly engage with a plurality of second gear teeth 66 formed on at least one intermediate gear 68. Each intermediate gear 68 is rotatable about an axis of rotation. As illustrated in Figure 8, the axis of rotation of each intermediate gear 68 is offset from the axis of rotation of the hub 54. Each intermediate gear 68 includes a reduced diameter portion 70 supporting the plurality of second gear teeth 66 on an external periphery thereof, and an enlarged diameter portion 72 having a plurality of third gear teeth 74 supported on an external periphery thereof. The third gear teeth 74 intermeshingly engage with a plurality of fourth gear teeth 76 connected to or formed on a second shaft or pinion 78. The plurality of first, second, third, and fourth gear teeth 58, 66, 74, and 76 respectively, including hub 54, intermediate gear 68, and pinion 78, define gear means 90 for transmitting rotary motion from the clutch means 80 into linear movement of the drive member 48 along the guide means 22 in either direction to impart opening and closing movement to the closure member. The pinion 78 is connected to clutch means 80 for driving the pinion 78 in rotation about a rotatable axis. As illustrated in Figure 8, the rotatable axis of the pinion 78 is coaxial with the rotatable axis of the hub 54. The clutch means 80 is driven in rotation by a motor, not shown in Figure 8. Housing means 82 encloses the hub 54, intermediate gear 68 and clutch means 80. An example of a suitable clutch means 80, by way of example and not limitation, is disclosed and illustrated in U.S. No. 5,582,279 issued December 10, 1996 for "Acceleration Reaction Clutch With Override Capability", which is incorporated by references herein.

According to the present invention, the barrier is a construction forming an extended indefinite surface preventing or inhibiting the passage of persons or things, and can include a wall, ceiling, roof, or cover for a stationary structure or a movable vehicle, such as the van V. The portal is structured defining an opening through the barrier for passage of persons or things, such as the framing of a door, window, hatch, or roof panel opening. The movable closure is an obstructive structure whose presence in or before a passage bars traffic through the passage and is mounted to move in a regular, repetitive, predetermined path with respect to the portal so as to alternately open or close the passage, and can take the form of a hatch, a sliding window, a roof panel, or a sliding door D. Clutch means 80 provides for overrunning with respect to the intermediate gear 68 in response to manual manipulation of the movable closure, or for slipping in response to the movable closure contacting an obstruction prior to reaching the opened or closed positions.

The housing means 82 is connected to the guide track 34 for feeding the drive member 48 into operable engagement with the hub 54, and dispenses the drive member 48 into storage means 84, shown in Figures 2 and 3, for storing the portion of the drive member 48 driven through the hub 54. The storage means 84 may include a storage track 86 as best seen in Figures 2 and 3. It should be recognized that the location of the translator means 32 can be moved from that shown in Figures 1-3. The location of the translator means 32 can be moved by providing an appropriate length of drive member guide means 22 between the closed position and the translator means 32, and by adding an appropriate amount of spent drive member storage means 84 to accommodate the longer length of the drive member 48.

The door drive system according to the present invention uses a push/pull drive member 48 connected at one end to the movable closure, such as the door D and guided in longitudinal movement within a guide track 34 which extends parallel to the path of movement of the door at a position generally midway between the upper and lower edges of the portal or door opening. The drive member 48 is driven in longitudinal movement by a reversible electric motor controlled by an electronic control unit in a manner such that the door may be automatically stopped in response to sensing of an overload, such as the jamming of an object between the closing door and the door frame, or providing for express operation and cancellation. The employment of an electronic control unit enables the power drive for the door to be operated in a safe and efficient manner, as by providing the door with an antipinch capability by automatically stopping the drive if an object becomes trapped between the closing door and the door frame, providing for express operation and eliminating the need for limit switches to sense specific door positions. Electronic control units capable of being programmed to perform these, and similar functions, are well known and commercially available from a variety of sources.

Position sensing means 88 can be provided on the clutch means 80 for signaling the location of the sliding door D during manual and powered movement. Sensing means 88 is responsive to rotary movement of the clutch means 80 for transmitting to the electronic control unit a signal representative of the location of the door along the fixed path. The sensing means 88 can include a magnet connected to the clutch means 80 for rotation therewith and a magnetic sensor connected to the housing means 82 for sensing the position of the magnet as it passes by the sensor during rotation for transmitting to the electronic control unit a signal representative of the location of the door allowing the fixed path of travel between the open and closed positions during manual and powered operations.

Referring now to Figures 9 and 10, an alternative configuration of the translator means 32 is illustrated for use with a drive member 48 having a helically wound cable-like form. The previous description with respect to the translator means 32 illustrated in Figure 8 is equally applicable to the description of Figures 9 and 10 and structure has been labeled with like reference numerals to refer to like parts throughout the several views of Figures 8-10. In the translator means 32 illustrated in Figures 9 and 10, the drive member engaging protrusions 56 take an arcuate form in order to operably engage with at least one wire-like member helically wound in uniformly spaced turns around the core of the push/pull cable. The wire-like member or members are preferably disposed over an entire longitudinal length of the core to form a flexible screw-like member having an exterior helical gear tooth or thread defining a single lead, double lead, triple lead, or other multiple leads as desired for the particular application. The wire-like member or members can be heat treated to embed the cables in the stranded internal wire cable used as the flexible core as is conventional. A 13° lead is preferable with a lead angle in a range of between 5° and 70° inclusive. In all other respects, the translator means 32 of Figures 9 and 10 operates in the same manner as previously described with respect to Figure 8.

During powered operations, the motor (not shown) drives the clutch means 80 in either rotational direction. The clutch means 80 transmits rotational motion through gear means 90 to the rotatable hub 54. The drive member engaging protrusions 56 formed on the rotatable hub 54 engage the drive member 48 to move the drive member 48 longitudinally in either direction corresponding to the rotational direction of the reversible motor. When opening the movable closure, initially the latch mechanism is released as is conventional, and the motor is rotated in a first direction to push the elongated means 30 and bracket means 28 with sufficient force to release the movable closure from the seals extending around the periphery of the portal, in cooperation with simultaneously resetting a power striker to its initial position. The closure member is then driven by the elongated means 30 through bracket means 28 along rear guide means 22 until reaching the fully open position as indicated by position sensor means 88. The motor is then deenergized, and the door is held in an open position by detent means as is conventional. During powered closing operations, the motor is energized in the reverse direction pulling the elongated means 30 and connected bracket means 28 along the rear guide means 22 from the open position to the closed position. The motor has sufficient power to overcome the detent means holding the movable closure in the open position, and also has sufficient power to pull the movable closure through the curved portion of the guide tracks adjacent the closed position moving the striker and fork bolt of the latch mechanism all the way through the secondary position to the primary latch position. The power striker is then actuated in order to move the sliding door into the seal extending around the periphery of the portal into a sealed and final closed position. During manual opening or closing movement, the movable closure is moved in the desired direction and at the desired speed with the clutch means 80 disengaged from the drive motor. The motion of the clutch means 80 in response to manual movement continues to provide an appropriate signal through sensing means 88 to indicate the position of the movable closure to the electronic control unit.

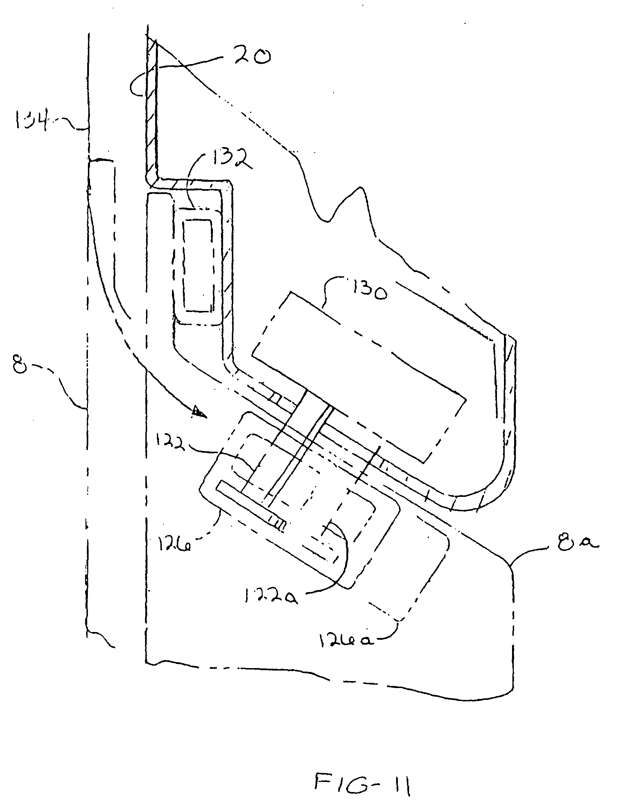

The power drive according to the present invention can include a fork bolt 122 connected to one of the movable closure 8 and the barrier 20 as best seen in Figure 11. Striker means 126 engages the fork bolt 122 when in the primary latch position illustrated as shown in Figure 11 with the movable closure labeled 8a, the fork bolt labeled 122a and the striker means labeled 126a, and a secondary latch position as illustrated in Figure 11 with the movable closure labeled as 8, the fork bolt as 122 and the striker means as 126. The striker means 126 is for moving the movable closure 8 to a fully closed and sealed position illustrated at 8a when the fork bolt 122 and the striker means 126 is in the primary latch position illustrated as 122a and 126a respectively. One of the fork bolt 122 and the striker means 126 is movable with the closure 8 between the secondary latch position illustrated as 122 and 126, and the primary latch position illustrated as 122a and 126a. Power means 130 moves the fork bolt 122 and the striker means 126 to a fully closed and sealed position when the fork bolt 122 and striker means 126 are in the primary latch position illustrated as 122a and 126a respectively to engage the movable closure 8 when in the position illustrated as 8a with a seal strip 132 extending substantially around the portal, such that the movable closure 8 moves sufficiently along the fixed path 134 between an unsealed position of the movable closure illustrated in phantom at 8 and a sealed position illustrated in phantom at 8a to compress the seal strip 132 between the movable closure 8a and the barrier 20. The sliding door system according to the present invention accommodates manual operation and powered operation of a sliding door or movable closure 8 in forward and rearward movement along a fixed path 134 between an open position and a closed position with respect to a frame 20 defining a door opening. The translator means 32 can include single means for driving the movable closure 8 between the open and closed positions. The single means is for pulling the movable closure 8 until the fork bolt 122 and the striker means 126 pass through the secondary latch position shown in phantom as numerals 122 and 126 respectively to the primary latch position shown in phantom as numerals 122a and 126a respectively in Figure 11.

While the invention has been described in connection with what is presently considered to be the most practical and preferred embodiment, it is to be understood that the invention is not to be limited to the disclosed embodiments but, on the contrary, is intended to cover various modifications and equivalent arrangements included within the scope of the appended claims, which scope is to be accorded the broadest interpretation so as to encompass all such modifications and equivalent structures as is permitted under the law.

## Claims

1. A power drive system for a sliding door (D) mounted on at least one side of a vehicle (V) for sliding movement forwardly and rearwardly of the vehicle (V) along a fixed non-linear path between an open position and a closed position with respect to a frame defining a door opening, said system including reversible power drive means operable when actuated to selectively drive said door (D) in opening or closing movement, said sliding door (D) being operably engageable with first and second guide tracks (34) generally extending along first and second opposite edges respectively of said sliding door (D), a bracket (28) operably connected to said sliding door (D) adjacent a rear edge generally midway between said first and second opposite edges of said sliding door (D), guide means connected to said vehicle (V) generally midway between said first and second opposite edges and operably engages said bracket (28) for guiding said sliding door (D) along said fixed non-linear path between said open and closed positions of said sliding door (D), latch means for holding the sliding door (D) in the closed position, the latch means including a fork bolt (122) and a striker (126) engageable with one another in a secondary latch position wherein said fork bolt (122) and striker (126) are partially engaged and a primary latch position wherein said fork bolt (122) and striker (126) are fully engaged,
elongated means (30) is slidably disposed within said guide means (22) and connected to said bracket (28) for driving said sliding door (D) along said fixed non-linear path, said elongated means (30) has first and second longitudinal ends spaced apart from one another, a first end (50) of said elongated means (30) is connectible to said bracket (28) for pulling said sliding door (D) from said open position to said closed position and for pushing said sliding door (D) from said closed position to said open position; and
translator means (32) is operably engageable with said elongated means (30) for powering movement of said elongated means (30) with respect to said guide means (22) along said fixed non-linear path,
**characterized in that**:
said translator means (32) is disposed adjacent the rear edge of said frame defining said door opening generally midway between said first and second guide tracks (10, 12), such that the translator means (32) operably engages the elongated means (30) at a position in-line with the bracket (28) attached to the sliding door (D) midway between the first and second guide tracks (10, 12), thereby allowing direct in-line tangential application of force from the translator means (32) to the sliding door (D) through the elongated means (30) adjacent the non-linear portion of the fixed path,whereby movement of the sliding door (D) by the translator means (32) engages the fork bolt (122) and the striker (126) with respect to one another with low momentum.

2. The power drive system of claim 1 further **characterized in that**:
said translator means (32) pulls the sliding door (D) in translation movement extending transversely inboard with respect to a longitudinal axis of the vehicle (V) until said fork bolt (122) and said striker (126) pass through said secondary latch position to said primary latch position.

3. The power drive system of claim 1 or 2 wherein said translator means (32) is further **characterized in that**:
gear means (90) translates rotary motion into linear motion of said drive member (48) along the guide means (22) in either direction to impart opening and closing movement to said sliding door (D);
reversible drive means provides said rotary motion in either rotational direction; and
clutch means (80) is disposed between said drive means and said gear means (90) for accommodating either manual or powered movement of said sliding door (D) along said fixed non-linear path.

4. The power drive system of claim 3 further **characterized in that**:
position sensing means (88) responsive to rotary movement of said clutch means (80) for transmitting a signal representative of a location of said sliding door (D) during manual and powered movement of said sliding door along said fixed non-linear path.

5. The power drive system of claim 4 wherein said position sensing means (88) is further **characterized in that**:
a magnet is disposed on said clutch (80) for rotation therewith as said sliding door (D) is moved along said fixed non-linear path during manual or powered movement; and
a magnetic sensor senses the magnetic as the clutch (80) rotates during movement of the sliding door (D).

6. The power drive system of one of the preceding claims wherein said translator means (32) is further **characterized in that**:
a rotatable hub (54) has drive-member-engaging protrusions (56) on an external surface and a plurality of first gear teeth (58) formed on an internal surface, said hub (54) has a first axis and is connected to a first shaft (60) by bearings (62) for rotation about said first axis;
at least one intermediate gear (68) includes a reduced diameter portion (70) supporting a plurality of second gear teeth (90) on an external periphery thereof in intermeshing engagement with said plurality of first gear teeth (58), and an enlarged diameter portion (72) has a plurality of third gear teeth (74) supported on an external periphery thereof; and
a pinion (78) has a plurality of fourth gear teeth (76) formed on an external periphery thereof in intermeshing engagement with said plurality of third gear teeth (74).

7. The power drive system of claim 6 further **characterized in that**:
each intermediate gear (68) is rotatable about an axis of rotation generally parallel to and offset from said first axis; and
said pinion (78) has an axis of rotation coaxial with said first axis.

8. The power drive system of claim 6 or 7 further **characterized in that**:
at least two intermediate gears (68) are provided in a common plane and on diametrically opposite sides of said first axis.

9. The power drive system of one of the preceding claims wherein said latch means is further **characterized in that**:
said fork bolt (122) is connected to one of said sliding door (D) and said frame;
said striker (126) engages said fork bolt (122) when in a primary latch position and a secondary latch position, said striker (126) moves the sliding door (D) to a fully closed and sealed position when the fork bolt (122) and striker (126) are in said primary latch position, one of said fork bolt (122) and said striker (126) being moveable with respect to said sliding door (D) between the secondary latch position and the primary latch position; and
power means (130) moves the fork bolt (122) and striker (126) when in the primary latch position to engage the sliding door (D) with a seal strip extending substantially around said door (D) opening, such that said sliding door (D) moves in translation movement extending transversely inboard with respect to a longitudinal axis of the vehicle (V) sufficiently along the fixed non-linear path (134) between an unsealed position and a sealed position to compress said seal strip (132) between said sliding door (D) and said frame.

10. The power drive system of one of the preceding claims wherein said translator means (32) is further **characterized in that**:
said translator means (32) pulls the sliding door (D) in translation movement extending transversely inboard with respect to a longitudinal axis of the vehicle (V) until said fork bolt (122) and said striker (126) pass through said secondary latch position to said primary latch position, said translator means (32) includes reversible drive means for providing rotary motion in either rotational direction;
gear means (68) translates rotary motion into linear motion of said drive member along the guide means (22) in either direction to impart opening and closing movement to said sliding door (D), said gear means (68) includes a rotatable hub (54) having drive-member-engaging protrusions (56) on an external surface and a plurality of first gear teeth (58) formed on an internal surface, said hub (54) has a first axis and is connected to a first shaft (60) by bearings (62) for rotation about said first axis, each one of at least two intermediate gears (68) includes a reduced diameter portion (70, 72) supporting a plurality of second gear teeth (66) on an external periphery thereof in intermeshing engagement with said plurality of first gear teeth (58), and an enlarged diameter portion has a plurality of third gear teeth (74) supported on an external periphery thereof, each intermediate gear (68) is rotatable about an axis of rotation generally parallel to and offset from said first axis, and a pinion (78) has a plurality of fourth gear teeth (76) formed on an external periphery thereof in intermeshing engagement with said plurality of third gear teeth (74), said pinion (78) has an axis of rotation coaxial with said first axis;
clutch means (80) is disposed between said drive means and said gear means for accommodating either manual or powered movement of said sliding door (D) along said fixed non-linear path; and
position sensing means (88) responsive to rotary movement of said clutch means (80) transmits a signal representative of a location of said sliding door (D) during manual and powered movement of said sliding door (D) along said fixed non-linear path (134), said position sensing means (88) includes a magnet disposed on said clutch (80) for rotation therewith as said sliding door (D) is moved along said fixed non-linear path (134) during manual or powered movement, and a magnetic sensor senses the magnetic as the clutch (80) rotates during movement of the sliding door (D).

## Patentansprüche

1. Motorantriebssystem für eine Schiebetür (D), die an wenigstens einer Seite eines Fahrzeuges (V) für eine bezüglich des Fahrzeuges (V) vorwärts und rückwärts gerichtete Verschiebebewegung entlang eines festen, nicht linearen Weges zwischen einer offenen Position und einer geschlossenen Position relativ zu einem Rahmen montiert ist, welcher eine Türöffnung definiert, wobei dieses System umsteuerbare Motorantriebsmittel umfasst, die, wenn sie aktiviert werden, so betreibbar sind, dass sie wahlweise die Tür (D) zu einer Öffnungs- oder Schließbewegung antreiben, wobei die Schiebetür (D) betriebsmäßig mit ersten und zweiten Führungsbahnen (34) in Eingriff bringbar sind, die sich allgemein jeweils entlang erster und zweiter voneinander abgewandter Kanten der Schiebetüre (D) erstrecken, wobei ein Auslegerbeschlag (28) betriebsmäßig mit der Schiebetür (D) im Bereich einer hinteren Kante allgemein in der Mitte zwischen den ersten und zweiten voneinander abgewandten Kanten der Schiebetür (D) verbunden ist, wobei Führungsmittel mit dem Fahrzeug (V) allgemein in der Mitte zwischen den ersten und zweiten voneinander abgewandten Kanten verbunden sind und betriebsmäßig mit dem Auslegerbeschlag (28) im Eingriff sind, um die Schiebetür (D) entlang dem festen, nicht linearen Weg zwischen der offenen und geschlossenen Position der Schiebetür (D) zu führen, ferner Verriegelungsmittel zum Halten der Schiebetür (D) in der geschlossenen Position, wobei die Verriegelungsmittel einen Gabelbolzen (122) und einen Anschlag (126) umfassen, die miteinander in einer sekundären Verriegelungsposition in Eingriff bringbar sind, bei der der Gabelbolzen (122) und der Anschlag (126) teilweise im Eingriff sind, sowie einer primären Verriegelungsposition, bei der der Gabelbolzen (122) und der Anschlag (126) vollständig im Eingriff sind,
wobei langgestreckte Mittel (30) verschiebbar innerhalb der Führungsmittel (122) angeordnet und mit dem Auslegerbeschlag (28) im Eingriff sind, um die Schiebetür (D) entlang dem festen, nicht linearen Weg anzutreiben,
wobei diese langgestreckten Mittel (30) erste und zweite Längsenden haben, die voneinander beabstandet sind, wobei ein erstes Ende (50) dieser langgestreckten Mittel (30) mit dem Auslegerbeschlag (28) verbindbar ist, um die Schiebetür (D) aus der offenen Position in die geschlossene Position zu ziehen, und um die Schiebetür (D) aus der geschlossenen Position in die offene Position zu schieben; und
wobei Verstellmittel (32) betriebsmäßig mit den langgestreckten Mitteln (30) in Eingriff bringbar sind, um eine Leistung für die Bewegung der langgestreckten Mittel (30) relativ zu den Führungsmitteln (22) entlang dem festen, nicht linearen Weg zu übertragen, **dadurch gekennzeichnet,**
**dass** die Verstellmittel (32) im Bereich der hinteren Kante des die Türöffnung definierenden Rahmens allgemein in der Mitte zwischen den ersten und zweiten Führungsbahnen (10, 12) so angeordnet sind, dass die Verstellmittel (32) mit den langgestreckten Mitteln (30) betriebsmäßig bei einer Position in Reihe (englisch: in line) mit dem Auslegerbeschlag (28) im Eingriff sind, welcher an der Schiebetür (D) in der Mitte zwischen den ersten und zweiten Führungsbahnen (10, 12) angebracht ist, wodurch eine direkte tangentiale Kraftaufbringung in Reihe (englisch: in line) von den Verstellmitteln (32) auf die Schiebetür (D) über die langgestreckten Mittel (30) im Bereich des nicht linearen Abschnittes des festen Weges ermöglicht wird, wodurch eine Bewegung der Schiebetür (D) durch die Verstellmittel (32) den Gabelbolzen (122) und den Anschlag (126) mit einem niedrigen Schwingmoment miteinander in Eingriff bringt.

2. Motorantriebssystem nach Anspruch 1, ferner **dadurch gekennzeichnet, dass**:
die Verstellmittel (32) die Schiebetür (D) in einer Translationsbewegung ziehen, die sich bezüglich einer Längsachse des Fahrzeuges (V) quer einwärts erstreckt, bis der Gabelbolzen (122) und der Anschlag (126) über die sekundäre Verriegelungsposition in die primäre Verriegelungsposition gelangen.

3. Motorantriebssystem nach Anspruch 1 oder 2, bei welchem die Verstellmittel (32) ferner **dadurch gekennzeichnet sind, dass**:
Getriebemittel (90) eine Drehbewegung in eine lineare Bewegung des Antriebselementes (48) entlang der Führungsmittel (22) in beliebiger Richtung umsetzen, um eine Öffnungs- bzw. Schließbewegung der Schiebetür (D) zu bewirken;
umsteuerbare Antriebsmittel diese Drehbewegung in beliebiger Drehrichtung erzeugen; und dass Kupplungsmittel (80) zwischen den Antriebsmitteln und den Getriebemitteln (90) vorgesehen sind, um entweder eine manuelle oder eine motorische Bewegung der Schiebetür (D) entlang des festen, nicht linearen Weges zu bewirken.

4. Motorantriebssystem nach Anspruch 3, ferner **dadurch gekennzeichnet, dass**:
auf eine Drehbewegung der Kupplungsmittel (80) ansprechende Positionserfassungsmittel (88) zum Übermitteln eines Signals vorgesehen sind, welches für eine Stellung der Schiebetür (D) während einer manuellen bzw. motorischen Bewegung dieser Schiebetür entlang des festen, nicht linearen Weges kennzeichnend ist.

5. Motorantriebssystem nach Anspruch 4, bei welchem die Positionserfassungsmittel (88) ferner **dadurch gekennzeichnet sind, dass**:
ein Magnet an der Kupplung (80) vorgesehen ist und sich mit dieser dreht, wenn die Schiebetür (D) entlang des festen, nicht linearen Weges während einer manuellen oder motorischen Bewegung verstellt wird; und dass
ein Magnetsensor das Magnetfeld erfasst, wenn die Kupplung (80) sich während der Bewegung der Schiebetür (D) dreht.

6. Motorantriebssystem nach einem der vorangehenden Ansprüche, bei welchem die Verstellmittel (32) ferner **dadurch . gekennzeichnet sind, dass**:
eine drehbare Nabe (54) in das Antriebselement eingreifende Vorsprünge (56) an einer externen Fläche sowie eine Vielzahl von ersten Getrieberadzähnen (58) aufweist, die an einer internen Fläche ausgebildet sind, wobei die Nabe (54) eine erste Achse hat und mit einer ersten Welle (60) über Lager (62) für eine Drehung um diese erste Achse verbunden ist;
wenigstens ein Zwischen-Getrieberad (68) einen Abschnitt (70) mit reduziertem Durchmesser umfasst, welcher eine Vielzahl von zweiten Getrieberadzähnen (90) an einer externen Peripherie desselben trägt, die in einem Verzahnungseingriff mit der Vielzahl von ersten Getrieberadzähnen (58) sind, und dass ein Abschnitt (72) mit vergrößertem Durchmesser eine Vielzahl von dritten Getrieberadzähnen (74) hat, die an einer externen Peripherie desselben angeordnet sind; und
ein Ritzel (78) eine Vielzahl von vierten Getrieberadzähnen (76) aufweist, die an einer externen Peripherie desselben ausgebildet sind und in einem Verzahnungseingriff mit der Vielzahl von dritten Getrieberadzähnen (74) stehen.

7. Motorantriebssystem nach Anspruch 6, ferner **dadurch gekennzeichnet, dass**:
jedes Zwischen-Getrieberad (68) um eine Drehachse drehbar ist, die allgemein parallel zu und gegenüber der ersten Achse versetzt ist; und
das Ritzel (78) eine Drehachse hat, die zu der ersten Achse koaxial ist.

8. Motorantriebssystem nach Anspruch 6 oder 7, ferner **dadurch gekennzeichnet, dass**:
wenigstens zwei Zwischen-Getrieberäder (68) in einer gemeinsamen Ebene und auf diametral einander gegenüberliegenden Seiten der ersten Achse vorgesehen sind.

9. Motorantriebssystem nach einem der vorangehenden Ansprüche, bei welchem die Verriegelungsmittel ferner **dadurch gekennzeichnet sind, dass**:
der Gabelbolzen (122) mit einem der beiden Bauteile, nämlich der Verschiebetür (D) bzw. dem Rahmen verbunden ist;
der Anschlag (126) mit dem Gabelbolzen (122) im Eingriff ist, wenn er sich in einer primären Verriegelungsposition sowie in einer sekundären Verriegelungsposition befindet, der Anschlag (126) die Schiebetür (D) in eine vollständig geschlossene und abgedichtete Position bewegt, wenn der Gabelbolzen (122) und der Anschlag (126) sich in der primären Verriegelungsposition befinden, wobei eines der beiden Bauteile, nämlich der Gabelbolzen (122) bzw. der Anschlag (126) bezüglich der Schiebetür (D) zwischen der zweiten Verriegelungsposition und der primären Verriegelungsposition beweglich ist, und dass Motorantriebsmittel (130) den Gabelbolzen (122) und den Anschlag (126) dann, wenn sich diese in der primären Verriegelungsposition befinden, so bewegen, dass die Schiebetür (D) zur Anlage an einem Dichtungsstreifen kommt, welcher sich im wesentlichen um die Öffnung der Tür (D) herum erstreckt derart, dass sich die Schiebetür (D) in einer Translationsbewegung, die sich bezüglich einer Längsachse des Fahrzeuges (V) quer einwärts erstreckt, ausreichend weit entlang des festen, nicht linearen Weges (134) zwischen einer unabgedichteten Position und einer abgedichteten Position bewegt, um den Dichtungsstreifen (132) zwischen der Schiebetür (D) und dem Rahmen zusammenzudrücken.

10. Motorantriebssystem nach einem der vorangehenden Ansprüche, bei welchem die Verstellmittel (32) ferner **dadurch gekennzeichnet sind, dass**:
die Verstellmittel (32) die Verschiebetür (D) in einer Translationsbewegung zieht, die sich bezüglich einer Längsachse des Fahrzeuges (V) quer einwärts erstreckt, bis der Gabelbolzen (122) und der Anschlag (126) über die sekundäre Verriegelungsposition in die primäre Verriegelungsposition gelangen, wobei die Verstellmittel (32) umsteuerbare Antriebsmittel umfassen, um eine Drehbewegung in einer beliebigen Drehrichtung zu erzeugen; Getriebemittel (68) die Drehbewegung in eine lineare Bewegung des Antriebselementes entlang den Führungsmitteln (22) in beliebiger Richtung umsetzen, um eine Öffnungs- bzw. Schließbewegung auf die Schiebetür (D) zu übertragen,
wobei die Getriebemittel (68) eine drehbare Nabe (54) umfassen, die in die Antriebsmittel eingreifende Vorsprünge (56) an einer externen Fläche sowie eine Vielzahl von ersten Getrieberadzähnen (58) aufweist, die an einer internen Fläche ausgebildet sind, wobei die Nabe (54) eine erste Achse aufweist und mit einer ersten Welle (60) über Lager (62) für eine Drehung um die erste Achse verbunden ist, wobei jedes von wenigstens zwei Zwischen-Getrieberädern (68) einen Abschnitt (70, 72) mit reduziertem Durchmesser umfasst, welcher eine Vielzahl von zweiten Getrieberadzähnen (66) an einer externen Peripherie desselben trägt, die sich in einem Verzahnungseingriff mit der Vielzahl von ersten Getrieberadzähnen (58) befinden, sowie einen Abschnitt mit einem vergrößerten Durchmesser, welcher eine Vielzahl von dritten Getrieberadzähnen (74) aufweist, die an einer externen Peripherie desselben angeordnet sind, wobei jedes Zwischen-Getrieberad (68) um eine Drehachse drehbar ist, die allgemein parallel zu und versetzt gegenüber der ersten Achse ist, und wobei ein Ritzel (78) eine Vielzahl von vierten Getrieberadzähnen (76) aufweist, die an einer externen Peripherie desselben ausgebildet sind und sich in einem Verzahnungseingriff mit der Vielzahl von dritten Getrieberadzähnen (74) befinden,
wobei das Ritzel (78) eine Drehachse hat, die zu der ersten Achse koaxial ist;
dass Kupplungsmittel (80) zwischen den Antriebsmitteln und den Getriebemitteln vorgesehen sind, um sowohl eine manuelle als auch eine motorische Bewegung der Schiebetür (D) entlang des festen, nicht linearen Weges zu erzeugen; und
dass auf eine Drehbewegung der Kupplungsmittel (80) ansprechende Positionserfassungsmittel (88) während der manuellen und motorischen Bewegung der Schiebetür (D) entlang des festen, nicht linearen Weges (134) ein Signal aussenden, welches für einen Ort der Schiebetür (D) kennzeichnend ist, wobei die Positionserfassungsmittel (88) einen Magneten umfassen, welcher an der Kupplung (80) angeordnet ist und sich mit diesem dreht, wenn die Schiebetür (D) entlang des festen, nicht linearen Weges (134) während der manuellen oder motorischen Bewegung bewegt wird, und ein Magnetsensor das Magnetfeld erfasst, wenn die Kupplung (80) sich während der Bewegung der Schiebetür (D) dreht.

## Revendications

1. Système d'entraînement motorisé pour une portière coulissante (D) montée sur au moins un côté d'un véhicule (V) pour opérer un mouvement de coulissement vers l'avant et vers l'arrière du véhicule (V) le long d'un trajet non linéaire fixe entre une position ouverte et une position fermée par rapport à un cadre définissant une ouverture de portière, ledit système comprenant des moyens d'entraînement motorisé réversibles pouvant agir lorsqu'ils sont actionné, pour entraîner sélectivement ladite portière (22) selon un mouvement d'ouverture ou de fermeture, ladite portière coulissante (D) pouvant coopérer en fonctionnement avec des première et second pistes de guidage (34) qui s'étendent d'une manière générale respectivement le long de premier et second bords opposés de ladite portière coulissante (D), une console (28) raccordée en fonctionnement à ladite portière coulissante (D) au voisinage d'un bord arrière d'une manière générale à mi-distance entre lesdits premier et second bords opposés de ladite portière coulissante (D), des moyens de guidage raccordés audit véhicule (V) d'une manière générale à mi-distance entre lesdits premier et second bords opposés et coopérant en fonctionnement avec ladite console (28) pour guider ladite portière coulissante (D) le long dudit trajet non linéaire fixe entre lesdites positions ouverte et fermée de ladite portière coulissante (D), des moyens de verrouillage pour retenir la portière coulissante (D) dans la position fermée, les moyens de verrouillage incluant un boulon à fourche (122) et un percuteur (126) pouvant coopérer entre eux dans une position de verrouillage secondaire, dans laquelle ledit boulon à fourche (122) et le percuteur (126) engrenant partiellement, et une position de verrouillage principale, dans laquelle ledit boulon à fourche (122) et le percuteur (126) engrènent complètement, des moyens allongés (30) sont disposés de manière à pouvoir glisser dans lesdits moyens de guidage (22) et sont raccordés à ladite console (28) pour entraîner ladite portière coulissante (D) le long dudit trajet fixe non linéaire, lesdits moyens allongés (30) possèdent des première et seconde extrémités longitudinales distantes l'une de l'autre, une première extrémité (50) desdits moyens allongés (30) peut être raccordée à ladite console (28) pour tirer ladite portière coulissante (D) depuis ladite position ouverte vers ladite position fermée et pour repousser ladite portière coulissante (D) de ladite position fermée vers ladite position ouverte; et des moyens de translation (32) peuvent coopérer en fonctionnement avec lesdits moyens allongés (30) pour provoquer le déplacement desdits moyens allongés (30) par rapport auxdits moyens de guidage (22) le long dudit trajet fixe non linéaire, **caractérisé en ce que** lesdits moyens de translation (32) sont disposés au voisinage du bord arrière dudit cadre définissant ladite ouverture de portière d'une manière générale à mi-chemin entre lesdites première et seconde pistes de guidage (10, 12) de telle sorte que les moyens de translation (32) coopèrent en fonctionnement avec les moyens allongés (30) dans une position en ligne avec la console (28) fixée à la portière coulissante (D) à mi-chemin entre les première et seconde pistes de guidage (10, 12), ce qui a pour effet de permettre l'application tangentielle directe en ligne d'une force depuis des moyens de translation (32) à la portière coulissante (D) à l'aide des moyens allongés (30) adjacents à la partie non linéaire du trajet fixe, le déplacement de la portière coulissante (D) sur les moyens de translation (32) amenant le boulon à fourche (122) et le percuteur (126) à coopérer entre eux avec une faible énergie cinétique.

2. Système d'entraînement motorisé selon la revendication 1, **caractérisé en outre en ce que**:
lesdits moyens de translation (32) tirent la portière coulissante (D) selon un mouvement de translation s'étendant transversalement à l'intérieur par rapport à un axe longitudinal du véhicule (V) jusqu'à ce que ledit boulon à fourche (122) et ledit percuteur (126) passent par ladite position de verrouillage secondaire pour atteindre ladite position de verrouillage principale.

3. Système d'entraînement motorisé selon la revendication 1 ou 2, dans lequel lesdits moyens de translation (32) sont en outre **caractérisés en ce que**:
des moyens formant engrenage (90) convertissent un mouvement de rotation en un mouvement linéaire dudit organe d'entraînement (48) le long des moyens de guidage (22) dans une direction ou dans l'autre de manière à exécuter un déplacement d'ouverture et de fermeture de ladite portière coulissante (D);
des moyens d'entraînement réversible produisent ledit mouvement de rotation dans un sens de rotation ou dans l'autre; et
des moyens d'embrayage (80) sont disposés entre lesdits moyens d'entraînement et lesdits moyens formant engrenage (90) pour permettre un déplacement manuel ou un déplacement motorisé de ladite portière coulissante (D) le long dudit trajet non linéaire fixe.

4. Système d'entraînement motorisé selon la revendication 3, **caractérisé en outre par**:
des moyens de détection de position (88) aptes à répondre à un mouvement de rotation desdits moyens d'embrayage (80) pour transmettre un signal représentatif d'un emplacement de ladite portière coulissante (D) pendant un déplacement manuel et un déplacement motorisé de ladite portière coulissante le long dudit trajet non linéaire fixe.

5. Système d'entraînement motorisé selon la revendication 4, dans lequel lesdits moyens de détection de position (88) sont en outre **caractérisés en ce que**:
un aimant est disposé sur ledit embrayage (80) pour tourner avec ce dernier lorsque ladite portière coulissante (D) est déplacée le long dudit trajet non linéaire fixe, pendant un déplacement manuel ou motorisé; et
un capteur magnétique détecte le champ magnétique lorsque l'embrayage (80) tourne pendant le déplacement de la portière coulissante (D).

6. Système d'entraînement motorisé selon l'une des revendications précédentes, dans lequel lesdits moyens de translation (32) sont **caractérisés en ce que**:
un moyeu rotatif (54) possède des parties saillantes (56) d'engrènement avec l'élément d'entraînement, sur une surface externe et une pluralité de premières dents d'engrenage (58) formées sur une surface interne;
ledit moyeu (54) possède un premier axe, et est raccordé à un premier arbre (60) par des paliers (62) de manière à tourner autour dudit premier axe;
au moins un pignon intermédiaire (68) inclut une partie de diamètre réduit (70) supportant, sur une périphérie extérieure, une pluralité de secondes dents d'engrenage (90) qui engrènent avec ladite pluralité de premières dents
d'engrenage (58), et une partie de diamètre accrue (72) possède une pluralité de troisièmes dents d'engrenage (74) supportées par une périphérie extérieure de cette partie; et
un pignon (78) possède une pluralité de quatrièmes dents d'engrenage (76) formées sur une périphérie extérieure de ce pignon et engrenant avec ladite pluralité de troisièmes dents d'engrenage (74).

7. Système d'entraînement motorisé selon la revendication 6, **caractérisé en outre en ce que**:
chaque pignon intermédiaire (68) peut tourner autour d'un axe de rotation qui d'une manière générale est parallèle audit premier axe et est décalé par rapport à ce dernier; et
ledit pignon (78) possède un axe de rotation coaxial audit premier axe.

8. Système d'entraînement motorisé selon la revendication 6 ou 7, **caractérisé en outre en ce que**:
au moins deux pignons intermédiaires (68) sont prévus dans un plan commun et sur des côtés diamétralement opposés dudit premier axe.

9. Système d'entraînement motorisé selon l'une des revendications précédentes, dans lequel lesdits moyens de verrouillage sont en outre **caractérisés en ce que**:
ledit boulon à fourche (122) est raccordé à l'un de ladite portière coulissante (32) et dudit cadre;
ledit percuteur (126) engrène avec ledit boulon à fourche (122) lorsqu'il est dans une position de verrouillage principale et dans une position de verrouillage secondaire, ledit percuteur (126) déplace la portière coulissante (D) dans une position totalement fermée et étanche lorsque le boulon à fourche (122) et le percuteur (126) sont dans ladite position de verrouillage principale, l'un dudit boulon à fourche (122) et dudit percuteur (126) étant déplaçable par rapport à ladite portière coulissante (D) entre la position de verrouillage secondaire et la position de verrouillage principale; et
des moyens motorisés (130) déplacent le boulon à fourche (122) et le percuteur (126) lorsqu'ils sont dans la position de verrouillage principale pour amener la portière coulissante (D) à s'appliquer contre une bande d'étanchéité qui s'étend essentiellement autour de l'ouverture de ladite portière (D) de telle sorte que ladite portière coulissante (D) se déplace selon un mouvement de translation s'étendant transversalement vers l'intérieur par rapport à un axe longitudinal du véhicule (D) et ce d'une manière suffisante le long du trajet non linéaire fixe (134) entre une position non étanche et une position étanche pour comprimer ladite bande d'étanchéité (132) entre ladite portière coulissante (D) et ledit cadre.

10. Système d'entraînement motorisé selon l'une des revendications précédentes, dans lequel lesdits moyens de translation (32) sont **caractérisés en outre en ce que**:
lesdits moyens de translation (32) tirent la portière coulissante (D) selon un mouvement de translation s'étendant transversalement vers l'intérieur par rapport à un axe longitudinal du véhicule (V) jusqu'à ce que ledit boulon à fourche (122) et ledit percuteur (126) franchissant ladite position de verrouillage secondaire pour atteindre ladite position de verrouillage principale, lesdits moyens de translation (32) incluant des moyens d'entraînement réversibles pour réaliser un mouvement de rotation dans un sens de rotation ou dans l'autre,
des moyens formant engrenage (68) convertissent un mouvement de rotation en un mouvement linéaire dudit élément d'entraînement le long des moyens de guidage (32) dans un sens ou dans l'autre pour provoquer un mouvement d'ouverture et de fermeture de ladite portière coulissante (D), lesdits moyens formant engrenage (68) comprennent un moyeu rotatif (54) possédant sur une surface extérieure des parties saillantes (56) d'engrènement avec l'élément d'entraînement, qui sont formées sur une surface intérieure, ledit moyeu (54) possède un premier axe et est raccordé à un premier arbre (60) par des paliers (62) pour tourner autour dudit premier axe, chacun d'au moins deux pignons intermédiaires (68) comporte une partie de diamètre réduit (70, 72) supportant sur une périphérie externe, une pluralité de secondes dents d'engrenage (66) engrenant avec ladite pluralité de premières dents d'engrenage (58), et une partie de diamètre accrue possède une pluralité de troisièmes dents d'engrenage (74) supportées par une périphérie externe de cette partie de diamètre accrue, chaque pignon intermédiaire (68) peut tourner autour d'un axe de rotation qui d'une manière générale est parallèle audit premier axe en en étant décalé et un pignon (78) possède une pluralité de quatrième dents d'engrenage (76) formées sur une périphérie externe de ce pignon et engrenant avec ladite pluralité de troisièmes dents d'engrenage (74), ledit pignon (78) possède un axe de rotation coaxial audit premier axe;
des moyens d'embrayage (80) sont disposés entre lesdits moyens d'entraînement et lesdits moyens d'engrenage pour permettre un déplacement manuel ou motorisé de ladite portière coulissante (D) le long dudit trajet non linéaire fixe; et
des moyens de détection de position (88) aptes à répondre à un mouvement de rotation desdits moyens d'embrayage (80) transmettent un signal représentatif d'un emplacement de ladite portière coulissante (D) pendant un déplacement manuel et motorisé de ladite portière coulissante (D) le long dudit trajet non linéaire fixe (134), lesdits moyens de détection de position (88) comprennent un aimant disposé sur ledit embrayage (80) pour tourner conjointement avec ce dernier lorsque ladite portière coulissante (D) est déplacée le long dudit axe non linéaire fixe (134) pendant un déplacement manuel ou motorisé, et un capteur magnétique détecte le champ magnétique lorsque l'embrayage (80) tourne pendant le déplacement de la portière coulissante (D).
